# EUROPÄISCHE PATENTANMELDUNG

(11) **EP 2 407 308 A1**
(43) Veröffentlichungstag der Anmeldung: **18.01.2012**
(21) Anmeldenummer: 11005580.3
(22) Anmeldetag: 08.07.2011
(51) Int. Cl.: B41F 33/00, G01N 9/14

(54) **Vorrichtung zum Bestimmen des Alkoholgehalts von Feuchtmittel für den Offsetdruck**

(30) Priorität: 17.07.2010 DE 102010027548
(71) Anmelder: Platsch GmbH & Co. KG, 70565 Stuttgart (DE)
(72) Erfinder: Platsch, Hans-Ulrich, 70771 Leinfelden-Echterdingen (DE)
(74) Vertreter: Ostertag, Reinhard

(57) **Zusammenfassung**

Eine Vorrichtung (10) zur Bestimmung des Alkoholgehalts von Feuchtmittel für den Offsetdruck umfasst eine Messzelle (12), die einen Zulauf (16), über welchen der Messzelle (12) das Feuchtmittel zugeführt wird, und einen Überlauf (20) aufweist, welcher den Feuchtmittelpegel in der Messzelle (12) konstant hält. Die Vorrichtung umfasst ferner einen Schwimmer (24), der in der Messzelle (12) angeordnet ist und dessen vertikale Position von einer Positionserfassungseinrichtung (36) erfasst wird, um die Dichte des Feuchtmittels zu messen. Um die Messgenauigkeit zu verbessern ist der Messzelle (12) eine Abscheidekammer (14) vorgeschaltet, in deren Volumen sich das Feuchtmittel so weit verlangsamen und beruhigen kann, dass in dem Feuchtmittel enthaltene Luftblasen (50) entweichen, bevor das Feuchtmittel in die Messzelle (12) eintritt.

## Beschreibung

Die Erfindung betrifft eine Vorrichtung zur Bestimmung des Alkoholgehalts von Feuchtmittel für den Offsetdruck, gemäß dem Oberbegriff des Anspruches 1.

Im Offsetdruckbereich werden an verschiedenen Stellen Feuchtmittel verwendet, um beispielsweise auf den Plattenzylindern einer Offsetdruckmaschine farbabstoßende Bereiche zu bilden. Ein solches Feuchtmittel ist zumeist Wasser, dem ein bestimmter Anteil Alkohol und eine Reihe weiterer Zusatzmittel zugesetzt wurde. Der Alkoholzusatz dient dabei vor allem der Verringerung der Oberflächenspannung und der Viskosität des Wassers. Um die gewünschte Benetzung der Plattenzylinder zu erreichen, muss der Alkoholanteil im Wasser jedoch in engen Grenzen genau eingehalten werden. Zu diesem Zweck wird in einem meist geschlossenen Feuchtmittelkreislauf fortlaufend der Alkoholgehalt des Feuchtmittels bestimmt und falls notwendig Alkohol zudosiert.

Eine Vorrichtung eingangs genannter Art ist aus der DE 102 06 488 B4 bekannt.

Dort wird bei der Bestimmung des Alkoholgehalts der Umstand genutzt, dass mit der Änderung des Alkoholgehalts im Feuchtmittel eine Dichteänderung der Flüssigkeit einhergeht. Diese Dichteänderung des Feuchtmittels verursacht eine Änderung der Eintauchtiefe des in der Messzelle angeordneten Schwimmers. Durch Messen der Position des Schwimmers mit Hilfe der Positionserfassungseinrichtung kann bei bekanntem Feuchtmittelpegel dessen Eintauchtiefe ermittelt werden. Anhand von Referenzmessungen kann dann eine Kennlinie erstellt und mit deren Hilfe aus der aktuellen Schwimmerposition der Alkoholgehalt des in der Messzelle momentan vorhandenen Feuchtmittels bestimmt werden.

Es hat sich jedoch gezeigt, dass eine höhere Genauigkeit bei der Bestimmung des Alkoholgehalts wünschenswert ist.

Es ist daher Aufgabe der vorliegenden Erfindung, eine Vorrichtung zur Bestimmung des Alkoholgehalts von Feuchtmittel für den Offsetdruck anzugeben, bei welcher die Messgenauigkeit verbessert ist.

Diese Aufgabe gelöst durch eine Messvorrichtung gemäß Anspruch 1.

Dadurch, dass aus dem zur Dichtemessung verwendeten Volumen an Feuchtmittel vor der Dichtemessung Luft abgeschieden wird, werden Verfälschungen der Dichtemessung vermieden.

Mit der Erfindung wurde erkannt, dass bei Vorrichtungen herkömmlicher Bauart mit dem zugeführten Feuchtmittel kleine Luft- bzw. Gasblasen in die Messzelle gelangen. Da diese Luftblasen die effektive Dichte der Flüssigkeit verändern und sich die Luftblasen zudem an der Wandung des Schwimmers ablagern können und so dessen Auftrieb verändern, wird die Messgenauigkeit verschlechtert.

Bevorzugt ist vor den Zulauf der Messzelle eine Abscheidekammer vorgeschaltet ist, in deren Volumen sich das Feuchtmittel so weit verlangsamen und beruhigen kann, dass zumindest ein Großteil von in dem Feuchtmittel enthaltenen Luftblasen entweicht, bevor das Feuchtmittel in die Messzelle eintritt.

Beim Offsetdruck wird das Feuchtmittel normalerweise unter starken Turbulenzen mittels Pumpen im Feuchtmittelkreislauf gefördert. Dadurch, dass sich das Feuchtmittel in der vorgeschalteten Abscheidekammer zunächst beruhigen kann, können diese Turbulenzen abklingen und im Feuchtmittel enthaltene Luftblasen in der Abscheidekammer aufsteigen. Die aufgestiegenen Luftblasen werden an der Flüssigkeitsoberfläche an die Umgebungsluft abgegeben, welche dann aus einer Öffnung, beispielsweise einem Überlauf, der Abscheidekammer entweichen kann. Durch die Blasenabscheidung in der Abscheidekammer gelangt nur noch Feuchtmittel in die Messzelle, das bereits einen Großteil der in ihm enthaltenen Luftblasen abgegeben hat, sodass die effektive Flüssigkeitsdichte der tatsächlichen Dichte des Feuchtmittels entspricht. Auch setzen sich weniger Luftblasen an der Außenwand des Schwimmers ab.

Nach einer Weiterbildung der Erfindung ist vorgesehen, dass der Zulauf zur Messzelle unterhalb des Schwimmers, vorzugsweise in Bodennähe der Messzelle, angeordnet ist. Dadurch, dass der Zulauf gegenüber dem Überlauf der Messzelle möglichst tief angeordnet ist, durchströmt neu zugeführtes Feuchtmittel auf dem Weg zum Überlauf im Wesentlichen das gesamte Volumen der Messzelle, sodass weitestgehend das gesamte in der Messzelle enthaltene Feuchtmittel ausgetauscht wird. Die Dichtemessung wird so nicht durch noch in der Messzelle verbliebenes Feuchtmittel anderer Dichte verfälscht.

Nach einer anderen Weiterbildung ist vorgesehen, dass die Messzelle becherförmig mit vorzugsweise kreisförmigem Querschnitt ist und dass der Schwimmer vorzugsweise eine im Wesentlichen zylindrische Form hat und in der Mitte der Messzelle angeordnet ist. Bei dieser Anordnung handelt es sich um eine kompakt bauende Messzelle.

Nach einer anderen Weiterbildung ist vorgesehen, dass die Messzelle becherförmig mit quadratischem Querschnitt ist und dass der Schwimmer eine im Wesentlichen zylindrische Form hat und mittig in der Messzelle angeordnet ist. Aufgrund von Erwägungen bezüglich der Kompaktheit und des Einbaus der Vorrichtung ist ein quadratischer Querschnitt der Messzelle vorteilhaft. Zudem verbleiben zwischen dem kreisförmigen Querschnitt des Schwimmers und dem quadratischen Querschnitt der Messzelle Ecken, die den durchströmten Querschnitt vergrößern ohne die Außenabmessungen der Messzelle gegenüber jenen einer runden Messzelle nachteilig zu verändern. Die Strömungsgeschwindigkeit fällt durch den vergrößerten durchströmten Querschnitt jedoch geringer aus, sodass auch die von der Strömung hervorgerufenen Messfehler verringert werden.

Dabei ist nach einer weiteren Weiterbildung vorgesehen, dass die Breite des Ringraumes der Messzelleninnenfläche und der Schwimmeraußenfläche klein im Vergleich zur radialen Abmessung der Messzelle ist. Die Differenz beträgt insbesondere ungefähr 1/5 des Radius der Messzelle.

Nach dem archimedischen Prinzip ist der Auftrieb eines Körpers gleich dem Gewicht der von ihm verdrängten Flüssigkeit. Daher ist für die Messgenauigkeit der Dichtemessung das verdrängende Teilvolumen des Schwimmers und nicht die Gesamtflüssigkeitsmenge in der Messzelle maßgeblich. Es genügt daher für die Messung eine nicht besonders dicke Flüssigkeitsschicht um den Schwimmer. Dann ist das Flüssigkeitsvolumen in der Messzelle klein, sodass ein schneller Austausch des Flüssigkeitsvolumens stattfinden kann. Dies ermöglicht eine schnelle Reaktion der Vorrichtung auf Änderungen der Dichte. Das Flüssigkeitsvolumen sollte jedoch mindestens so groß gewählt werden und der Schwimmer so geometrisch gestaltet werden, dass der Schwimmer nicht durch Strömungseffekte beeinflusst wird, die sich aus der vom Zulauf zum Überlauf der Messzelle gerichteten Flüssigkeitsströmung ergeben.

Nach einer anderen Weiterbildung ist vorgesehen, dass die Messzelle becherförmig mit quadratischem Querschnitt ist und dass der Schwimmer eine im Wesentlichen zylindrische Form hat und mittig in der Messzelle angeordnet ist. Aufgrund von Erwägungen bezüglich der Kompaktheit und des Einbaus der Vorrichtung ist ein quadratischer Querschnitt der Messzelle vorteilhaft. Zudem verbleiben zwischen dem kreisförmigen Querschnitt des Schwimmers und dem quadratischen Querschnitt der Messzelle Ecken, die den durchströmten Querschnitt vergrößern ohne die Außenabmessungen der Messzelle gegenüber jenen einer runden Messzelle nachteilig zu verändern. Die Strömungsgeschwindigkeit fällt durch den vergrößerten durchströmten Querschnitt jedoch geringer aus, sodass auch die von der Strömung hervorgerufenen Messfehler verringert werden.

Nach einer anderen Weiterbildung ist vorgesehen, dass ein Abscheidekammerzulauf, über welchen das Feuchtmittel zugeführt werden kann, höher liegt als ein Abscheidekammerablauf, der zumindest indirekt mit dem Zulauf der Messzelle verbunden ist. Da die Luftblasen innerhalb der Abscheidekammer aufsteigen, ist es vorteilhaft, den Abscheidekammerablauf unterhalb des Abscheidekammerzulaufs, insbesondere in unmittelbarer Nähe zum Abscheidekammerboden oder im Abscheidekammerboden, anzuordnen. So werden nur diejenigen Schichten des Feuchtmittels dem Zulauf der Messzelle zugeführt, die wenige Luftblasen enthalten.

Nach einer anderen Weiterbildung ist vorgesehen, dass die Abscheidekammer einen Abscheidekammerüberlauf aufweist, der den Feuchtmittelpegel in der Abscheidekammer konstant hält und der höher als der Überlauf der Messzelle angeordnet ist. Durch die beiden Überläufe an der Abscheidekammer und an der Messzelle werden die Pegel des in ihnen enthaltenen Feuchtmittels festgelegt. Insbesondere wird durch einen konstanten Feuchtmittelpegel auch innerhalb der Abscheidekammer gewährleistet, dass der Einlassdruck an der Messzelle konstant ist und man folglich eine konstante Strömungsgeschwindigkeit des Feuchtmittels durch die Messzelle erhält, solange ausreichend Feuchtmittel zugeführt wird. In der Messzelle herrschen so stets die gleichen Strömungsverhältnisse vor.

Nach einer anderen Weiterbildung ist vorgesehen, dass in der Abscheidekammer ein Anlagermaterial angeordnet ist, welches das Feuchtmittel auf dem Weg zur Messzelle durchströmen muss. Das Anlagermaterial kann beispielsweise ein offenporiges Schaumstoffmaterial oder Faserpackungen, insbesondere Vliese, umfassen, Es wird im Volumen der Abscheidekammer so angeordnet ist, dass das Feuchtmittel nur nach Durchtreten durch das Anlagermaterial zum Abscheidekammerablauf gelangen kann. Das Anlagermaterial sorgt für eine noch bessere Luftblasenabscheidung. Dies beruht zum einen darauf, dass die Strömung innerhalb des Anlagermaterials noch stärker beruhigt wird und so bei gleichbleibender Luftblasenabscheidung eine Abscheidekammer mit einem kleineren Volumen gewählt werden kann. Zum anderen können sich kleinere Luftblasen, welche aufgrund ihres geringen Auftriebs nur langsam aufsteigen würden, an dem Anlagermaterial anlagern und nach und nach anwachsen, bis sie genügend Auftrieb besitzen, um sich von dem Anlagermaterial abzulösen und aufzusteigen. Insbesondere die Verwendung eines Anlagermaterials in Form eines Vlieses gewährleistet einen starken Anlagerungseffekt der Luftblasen. Je nach Anordnung des Anlagermaterials kann es vorteilhaft sein, den Abscheidekammerüberlauf strömungsmäßig hinter dem Anlagermaterial anzuordnen, sodass der Einlassdruck an der Abscheidekammer nicht vom Druckabfall über das Anlagermaterial abhängig ist, welcher sich durch Verschmutzung des Anlagermaterials im Laufe der Zeit ändern kann.

Nach einer anderen Weiterbildung der Erfindung bezüglich des Anlagermaterials ist vorgesehen, dass das Anlagermaterial von dem Feuchtmittel von oben nach unten durchströmt werden muss. Da wie bereits erläutert die Luftblasen, die sich an dem Anlagermaterial anlagern, mit der Zeit anwachsen und aufsteigen, ist diese Durchströmungsrichtung durch das Anlagermaterial besonders vorteilhaft, da so die aus dem Feuchtmittel ausgeschiedenen Luftblasen in die noch nicht gefilterten Schichten des Feuchtmittels aufsteigen. Unterhalb, d.h. strömungsmäßig hinter dem Anlagermaterial, sind dadurch nur wenige bis keine Luftblasen mehr im Feuchtmittel enthalten.

Nach einer anderen diesbezüglichen Weiterentwicklung ist vorgesehen, dass das Anlagermaterial als Anlagermaterialkerze mit einem inneren Hohlraum ausgebildet und in radialer Richtung durchströmbar ist. Eine Anlagermaterialkerze ist ein im Wesentlichen hohlzylindrisches Anlagermaterial, bei welchem die zu Anlagermaterialnde Flüssigkeit das Anlagermaterial beispielsweise von der äußeren Mantelfläche zur inneren Mantelfläche mit einer radialen Bewegungskomponente durchströmt. Wird eine solche Anlagermaterialkerze aufrechtstehend angeordnet, so können die Luftblasen seitlich entlang einer Anlagermaterialkerzenwand aufsteigen, ohne sich in einer nächsthöherliegenden Anlagermaterialschicht anzulagern. Dadurch wird ein effizientes Abscheiden der Luftblasen aus dem Feuchtmittel erreicht.

Weitere Merkmale und Vorteile der Erfindung ergeben sich aus der nachfolgenden Beschreibung von Ausführungsbeispielen anhand der Zeichnungen. Darin zeigen:
- Figur 1: eine schematische Darstellung einer Befeuchtungseinrichtung für ein Offsetdruck-Druckwalze;
- Figur 2: einen schematischen Schnitt einer Feuchtmitteldichte-Messvorrichtung mit einer Messzelle und einer Abscheidekammer, in welcher ein Anlager-material von oben nach unten durchströmt wird;
- Figur 3: eine Feuchtmitteldichte-Messvorrichtung nach einem weiteren Ausführungsbeispiel, bei welchem das Feuchtmittel seitlich in ein Anlagermaterial einströmt.

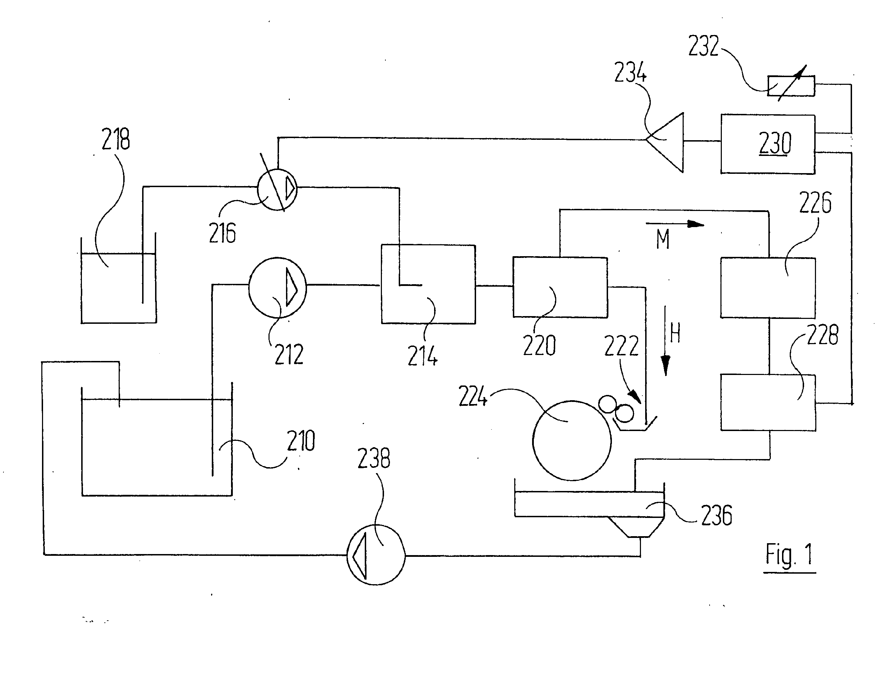

In Figur 1 ist ein Vorratstank für Feuchtmittel mit 210 bezeichnet. Aus ihm saugt eine Pumpe 212 an. Sie drückt das angesaugte Feuchtmittel in einen Mischbehälter 214, dem über eine Dosierpumpe 216 aus einem Alkohol-Vorratsbehälter 218 so viel Alkohol zugeführt wird, dass der Alkoholgehalt des den Mischbehälter 214 verlassenen Feuchtmittel einen vorgegebenen Wert hat.

Um den Ist-Alkoholgehalt des Feuchtmittels zu bestimmen, wird in einem Stromteiler 220 ein kleiner Messstrom M abgezweigt. Der verbleibende Hauptstrom H wird einem Feuchtwerk 222 zugeführt, welches mit einer Druckzylinder 224 zusammenarbeitet.

Der Messstrom M wird über einen Luftabscheider 226 einem Dichtemessgerät 228 zugeführt.

Dessen Ausgangssignal (Ist-Dichtesignal) wird auf den einen Eingang eines Komparators 230 gegeben, der am anderen Eingang ein Sollwert-Signal für den im Feuchtmittel einzustellenden Alkoholgehalt (Soll-Dichtesignal) erhält. Die Soll-Dichtesignalquelle ist bei 232 als einstellbarer widerstand veranschaulicht.

Das vom Komparator 232 erzeugte Dichte-Fehlersignal dient nach Verstärkung in einem Leistungsverstärker 234 der Ansteuerung der Dosierpumpe 216.

Unter dem Druckzylinder 224 und dem Feuchtwerk 222 ist eine Auffangwanne 236 angeordnet. Aus dieser saugt eine weitere Pumpe 238 an, welche verbrauchtes und überschüssiges Feuchtmittel in den Vorratsbehälter 210 zurück fördert.

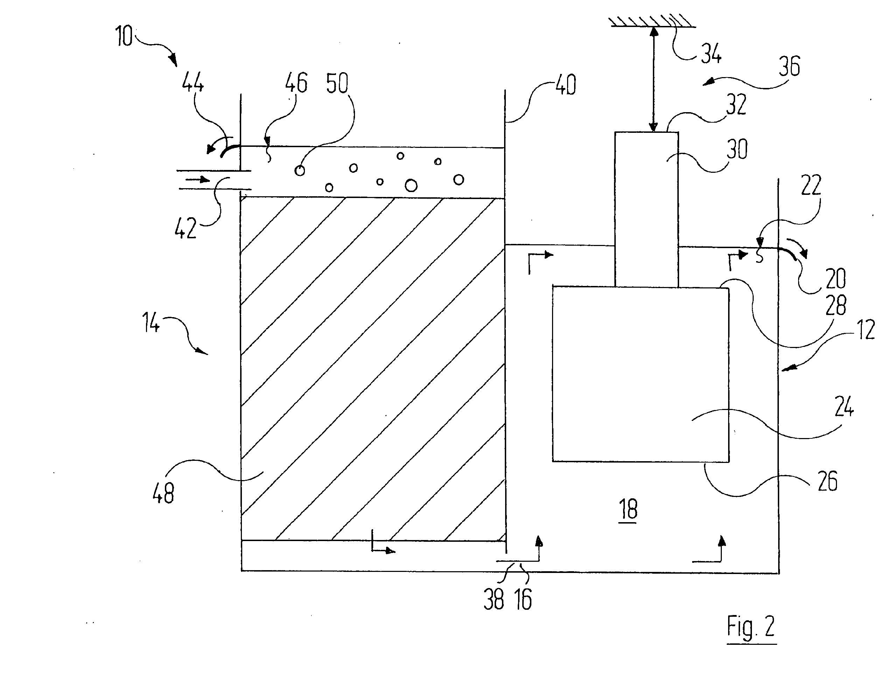

Figur 2 zeigt bei 10 eine erste praktische Ausführungsform einer Feuchtmitteldichte-Messvorrichtung, die zur Bestimmung des Alkoholgehalts im Feuchtmittel einer Offsetdruckmaschine verwendet wird. Die Feuchtmitteldichte-Messvorrichtung 10 umfasst eine Messzelle 12 und eine Abscheidekammer 14.

Die Messzelle 12 hat eine nach oben offene kreisrunde Becherform und weist in unmittelbarer Bodennähe an ihrem Umfang einen Zulauf 16 auf, über welchen einem in der Messzelle 12 enthaltenen Messvolumen 18 das Feuchtmittel zugeführt wird, dessen Dichte in der Messzelle 12 bestimmt werden soll.

Hierzu weist die Messzelle 12 an ihrer dem Zulauf 16 diametral gegenüberliegenden Umfangswand weiter oben gelegen einen Überlauf 20 auf. Durch den Überlauf 20 wird bei ausreichender Befüllung der Messzelle 12 ein Feuchtmittelpegel 22 genau festgelegt.

Um die Messzelle 12 gegenüber störenden Umgebungseinflüssen zu schützen, wird sie von einem nichtgezeigten Gehäusedeckel bedeckt und verschlossen. Das Volumen zwischen dem Feuchtmittelpegel 22 und dem Deckel steht jedoch über den Überlauf 20 mit der Umgebung in Verbindung.

Ein Schwimmer 24 ist koaxial über nicht gezeigte Halteeinrichtungen axial auf und ab beweglich im Messvolumen 18 angeordnet. Der Schwimmer 24 hat in einem unteren Abschnitt eine im Wesentlichen kreiszylindrische Form, deren untere und obere Stirnseite 26, 28 am Kreisumfang gegenüber der Mantelfläche des Kreiszylinders abgerundet sind, um eine günstiges Anströmverhalten zu gewährleisten. Der Außenradius des Schwimmers 24 und der Innenradius der Messzelle sind so gewählt, dass ihre Differenz ungefähr 1/5 des Innenradius der Messzelle 12 beträgt.

An der oberen Stirnseite 28 weist der Schwimmer 24 einen angeformten kleineren Durchmesser aufweisenden Schwimmerstab 30 auf, welcher konstanten Querschnitt hat und je nach Dichte des Feuchtmittels mehr oder weniger über den Feuchtmittelpegel 22 hinausragt.

Das Gewicht des Schwimmers 24 (inklusive Schwimmerstab 30) und die Schwimmergeometrie sind so gewählt, dass der Schwimmer 24 im gesamten Messbereich der Feuchtmitteldichte-Messvorrichtung 10 mit seinem kreiszylindrischen Teil stets vollständig unterhalb des Feuchtmittelpegels 22, d.h. innerhalb des Messvolumens 18, angeordnet bleibt.

Der Schwimmerstab 30 weist an seiner nach oben weisenden Stirnseite eine metallische Beschichtung 32 auf, welche von einem über dem Messvolumen 18 ortsfest angebrachten Sensor 34 mittels induktiver, kapazitiver, Ultraschall oder Lichtmessung erfasst wird. Die Beschichtung 32 und der Sensor 34 wirken zusammen als Positionserfassungseinrichtung 36, mit welcher die vertikale Position des Schwimmers 24 in der Messzelle 12 erfasst werden kann.

Die Positionserfassungseinrichtung 36 ermöglicht so eine kontinuierliche berührungslose Wegmessung des Schwimmers 24, mit deren Hilfe die Dichte des Feuchtmittel und so der Alkoholgehalt des Feuchtmittels bestimmt wird.

Die Abscheidekammer 14 ist im Ausführungsbeispiel nach Figur 2 neben der Messzelle 12 auf der Seite des Zulaufs 16 angeordnet und weist einen Abscheidekammerablauf 38 auf, welcher mit dem Zulauf 16 zur Messzelle 12 verbunden ist. Da in der stark schematisierten Figur 2 die Messzelle 12 und die Abscheidekammer 14 eine gemeinsame Wand 40 aufweisen, werden der Abscheidekammerablauf 38 und der Zulauf 16 zur Messzelle 12 von einer gemeinsamen Öffnung gebildet und sind so direkt verbunden.

Am oberen Ende der Abscheidekammer 14 ist dem Abscheidekammerablauf 38 diametral gegenüberliegend, jedoch in größerer Höhe, ein seitlicher Abscheidekammerzulauf 42 angeordnet, über welchen der Abscheidekammer 14 kontinuierlich oder intermittierend Feuchtmittel zugeführt werden kann, dessen Dichte bestimmt werden soll.

Die Abscheidekammer 14 weist ferner einen Abscheidekammerüberlauf 44 auf, der knapp oberhalb des Abscheidekammerzulaufs 42 angeordnet ist und einen maximalen Abscheidekammer-Feuchtmittelpegel 46 in der Abscheidekammer 14 festlegt.

Das Volumen der Abscheidekammer 14, das sich zwischen dem Abscheidekammerzulauf 42 und dem Abscheidekammerablauf 38 befindet, ist von einem Vliesmaterial ausgefüllt, welches ein Anlagermaterial 48 bildet, das von dem zugeführten Feuchtmittel von oben nach unten durchströmt wird. Das Anlagermaterial 48 scheidet im Feuchtmittel enthaltene Luftblasen 50 aus dem Feuchtmittel unter Anlagerung an seine Fasern und auch in Faserzwischenräume aus, so dass unterhalb des Anlagermaterials 48 keine Luftblasen 50 mehr im Feuchtmittel enthalten sind.

Auch die Abscheidekammer 14 ist mit einem nicht gezeigten Deckel verschlossen, sodass die durch die Blasenabscheidung über dem Abscheidekammer-Feuchtmittelpegel 46 erzeugte Luft nur durch den Abscheidekammerüberlauf 44 in die Umgebungsluft entweichen kann.

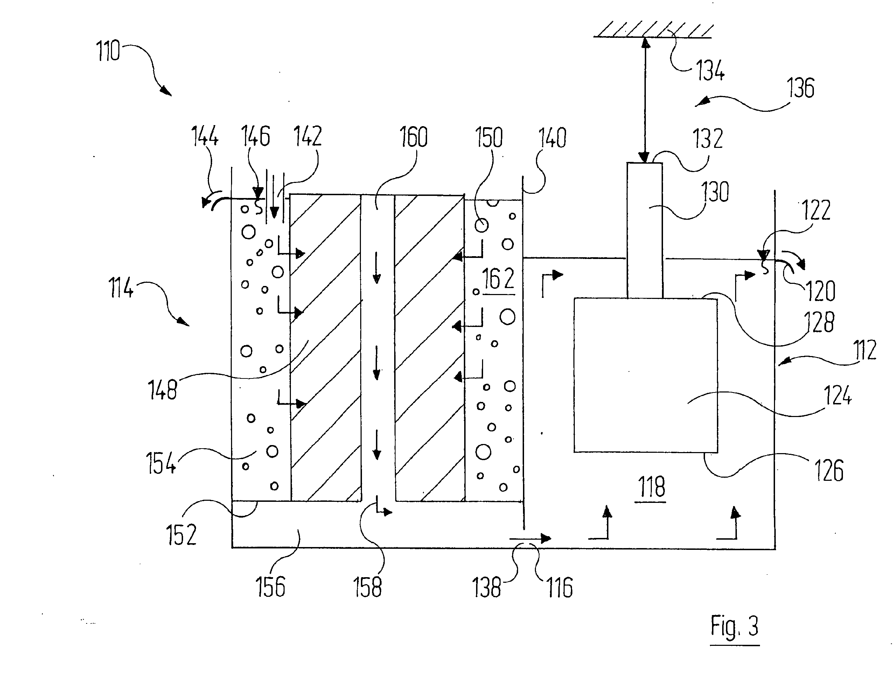

Das Ausführungsbeispiel nach Figur 3 unterscheidet sich von dem nach Figur 2 nur im Aufbau der Abscheidekammer 14. Daher wird im Folgenden auf die Beschreibung bereits bekannter Komponenten verzichtet und für sich entsprechende Komponenten werden jeweils um Hundert erhöhte Bezugszeichen verwendet.

Die Abscheidekammer 114 hat einen kreisrunden Querschnitt und weist knapp oberhalb des Abscheidekammerablaufs 138 einen Zwischenboden 152 auf, welcher das Volumen der Abscheidekammer 114 in einen oberen Bereich 154 und in einen unteren Bereich 156 unterteilt. In seiner Mitte weist der Zwischenboden 152 eine Durchtrittsöffnung 158 auf, welche einen Flüssigkeitsdurchtritt vom oberen Bereich 154 in den unteren Bereich 156 ermöglicht.

Auf dem Zwischenboden 152 aufsitzend ist eine hohlzylindrische Anlagermaterialkerze 148 aus einem offenporigen Anlagermaterial derart angeordnet, dass die Durchtrittsöffnung 158 in Verlängerung des freien Innenraumes 160 der Anlagermaterialkerze 148 liegt. Die Anlagermaterialkerze 148 sitzt hierzu in einem nicht gezeigten Ringbund, der konzentrisch um die Durchtrittsöffnung 158 am Zwischenboden 152 angeformt ist und dessen Innendurchmesser dem Außendurchmesser der Anlagermaterialkerze 148 entspricht. Durch ein Verspannen zwischen dem Deckel der Abscheidekammer 114 und dem Zwischenboden 152 wird die Anlagermaterialkerze 148 axial verspannt und so auch lateral auf dem Zwischenboden 152 fixiert und umschließt somit sicher die Durchtrittsöffnung 158.

Die Radien der Abscheidekammer 114 und der Anlagermaterialkerze 148 sind so gewählt, dass oberhalb des Zwischenbodens 152 um die Anlagermaterialkerze 148 umlaufend ein Zulaufbereich 162 verbleibt, in welchen das Feuchtmittel zugeführt wird.

Das Feuchtmittel, das über einen Abscheidekammerzulauf 142, welcher in den Zulaufbereich 162 von oben hineinragt, zugeführt wird, kann dann mit einer radialen Bewegungskomponente durch das Anlagermaterial nach innen in den Innenraum 160 der Anlagermaterialkerze 148 eintreten. Von dort fließt das Feuchtmittel nach unten durch die Durchtrittsöffnung 158 in den unteren Bereich 156 der Abscheidekammer 114, von wo es durch den Abscheidekammerablauf 138 zum Zulauf 116 der Messzelle 112 gelangt.

Der Abscheidekammerüberlauf 144 ist bei diesem Ausführungsbeispiel unterhalb des oberen Endes der Anlagermaterialkerze 148 angeordnet, damit die Anlägermaterialkerze 148 nicht überspült werden kann.

Bei einem nicht gezeigten Ausführungsbeispiel hat die Messzelle einen rechteckigen oder quadratischen Querschnitt. Der Schwimmer erhält dann eine passende Querschnittsform und wird wieder mittig in der Messzelle angeordnet, so dass sich ein quadratisch ringförmiger Durchströmraum ergibt.

Als Schwimmer kann jedoch auch weiterhin ein kreiszylindrischer Schwimmer verwendet, wodurch das Feuchtmittel auch entlang der zwischen dem Schwimmer und den Messzellenwänden verbleibenden Ecken durch die Messzelle strömen kann.

Auch bei diesen Ausführungsbeispielen beträgt die Differenz zwischen dem Radius bzw. dem mittleren Radius des Schwimmers und der halben Kantenlänge der Messzelle ungefähr 1/5 der halben Kantenlänge der Messzelle.

Hat die Abscheidekammer einen quadratischen oder rechteckigen Querschnitt, so ergibt sich eine Feuchtmitteldichte-Messvorrichtung mit insgesamt quaderförmigen Außenabmessungen zur einfacheren Anbringung beispielsweise am Rahmen einer Offsetdruckmaschine.

Bei einem anderen nicht gezeigten Ausführungsbeispiel ist die Abscheidekammer um die Messzelle umlaufend angeordnet, so dass sich in zwei zueinander senkrechten Richtungen gleichermaßen eine kompakte Bauweise der Feuchtmitteldichte-Messvorrichtung ergibt.

Über den Querschnitt des Schwimmerstabes 130 lässt sich die Empfindlichkeit bzw. der Messbereich des Messzelle 12 bzw. 112 einstellen.

## Patentansprüche

1. Vorrichtung (10; 110) zur Bestimmung des Alkoholgehalts von Feuchtmittel für den Offsetdruck, mit
a) einer Messzelle (12; 112), die aufweist: einen Zulauf (16; 116), über welchen der Messzelle (12; 112) das Feuchtmittel zugeführt wird, und einen Überlauf (20; 120), welcher den Feuchtmittelpegel in der Messzelle (12; 112) konstant hält, und
b) einem Schwimmer (24; 124), der in der Messzelle (12; 112) angeordnet ist und dessen vertikale Position von einer Positionserfassungseinrichtung (36; 136) erfasst wird,
**dadurch gekennzeichnet, dass**
c) vor dem Zulauf (16; 116) der Messzelle (12; 112) ein Luftabscheider (A) angeordnet ist.

2. Vorrichtung nach Anspruch 1, **dadurch gekennzeichnet, dass** der Luftabscheider (A) eine Abscheidekam mer (14; 114) auweist, in deren Volumen sich das Feuchtmittel so weit verlangsamen und/oder beruhigen kann, dass zumindest ein Großteil von in dem Feuchtmittel enthaltenen Luftblasen (50; 150) entweicht, bevor das Feuchtmittel in die Messzelle (12; 112) eintritt.

3. Vorrichtung nach Anspruch 1 oder 2, **dadurch gekennzeichnet, dass** der Zulauf (16; 116) zur Messzelle (12; 112) unterhalb des Schwimmers (24; 124), vorzugsweise in Bodennähe der Messzelle(12; 112), angeordnet ist.

4. Vorrichtung nach einem der Ansprüche 1 bis 3, **dadurch gekennzeichnet, dass** die Messzelle (12; 112) becherförmig mit vorzugsweise kreisförmigem Querschnitt ist und dass der Schwimmer (24; 124) vorzugsweise eine im Wesentlichen zylindrische Form hat und in der Mitte der Messzelle (12; 112) angeordnet ist.

5. Vorrichtung nach einem der Ansprüche 1 bis 3, **dadurch gekennzeichnet, dass** die Messzelle (12; 112) becherförmig mit rechteckigem oder quadratischem Querschnitt ist und dass der Schwimmer (24; 124) im Wesentlichen recheckigen, quadratischen oder kreisförmigen Form hat und mittig in der Messzelle (12; 112) angeordnet ist.

6. Vorrichtung nach Anspruch 4 oder 5, **dadurch gekennzeichnet, dass** der mittlere radiale Abstand zwischen der Innenfläche der Messzelle (12; 112) und der Außenfläche des Schwimmers (24; 124) klein im Vergleich zur mittleren radialen Abmessung der Messzelle (12; 112) ist, insbesondere ungefähr 1/5 de radialen Abmessung der Messzelle (12; 112) beträgt.

7. Vorrichtung nach einem der Ansprüche bis 6, **dadurch gekennzeichnet, dass** ein Abscheidekammerzulauf (42; 142), über welchen das Feuchtmittel zugeführt werden kann, höher liegt als ein Abscheidekammerablauf (38; 138), der zumindest indirekt mit dem Zulauf (16; 116) der Messzelle (12; 112) verbunden ist.

8. Vorrichtung nach einem der Ansprüche 2 bi 7, **dadurch gekennzeichnet, dass** die Abscheidekammer (14; 114) einen Abscheidekammerüberlauf (44; 144) aufweist, der den Feuchtmittelpegel in der Abscheidekammer (14; 114) konstant hält und der höher als der Überlauf (20; 120) der Messzelle (12; 112) angeordnet ist.

9. Vorrichtung nach einem der Ansprüche 2 bis 8, **dadurch gekennzeichnet, dass** in der Abscheidekammer (14; 114) ein Anlagermaterial (48; 148) angeordnet ist, welches das Feuchtmittel auf dem Weg zur Messzelle (12; 112) durchströmen muss.

10. Vorrichtung nach Anspruch 8, **dadurch gekennzeichnet, dass** das Anlagermaterial (48) von dem Feuchtmittel von oben nach unten durchströmt wird.

11. Vorrichtung nach Anspruch 8 oder 9, **dadurch gekennzeichnet, dass** das Anlagermaterial als Anlagermaterialkerze (148) mit einem inneren Hohlraum ausgebildet und in radialer Richtung durchströmbar ist.
